# EUROPÄISCHE PATENTSCHRIFT

(11) **EP 1 273 834 B1**
(45) Veröffentlichungstag und Bekanntmachung des Hinweises auf die Patenterteilung: **05.09.2007**
(21) Anmeldenummer: 02013687.5
(22) Anmeldetag: 20.06.2002
(51) Int. Cl.: F16J 3/04

(54) **Achsmanschette und Verfahren zu ihrer Herstellung**
Sealing boot and method for its production
Soufflet d'étanchéité et procédé pour sa fabrication

(30) Priorität: 02.07.2001 DE 10131302
(43) Veröffentlichungstag der Anmeldung: 08.01.2003
(73) Patentinhaber: Carl Freudenberg KG, 69469 Weinheim (DE)
(72) Erfinder: Hausbold, Kirsten, 10247 Berlin (DE); Rose, Urs, 31558 Hagenberg (DE)

(56) Entgegenhaltungen:
- EP-A- 0 389 099
- EP-A- 0 915 264
- DE-C- 19 806 173
- US-A- 5 525 288
- US-A- 5 529 538
- US-A- 5 900 205

## Beschreibung

Die Erfindung betrifft eine Achsmanschette nach dem Oberbegriff des Anspruchs 1 und ein Verfahren zu ihrer Herstellung.

Aus US-A-5 529 538 ist eine Achsmanschette nach dem einleitenden Teil von Patentanspruch 1 bekannt.

Aus EP 0 915 264 A2 ist ein Schutzbalg bekannt, bei dem mittels Spritzformen, vorzugsweise aus thermoplastischem Material, Tripode-Elemente und Lamellen ausgebildet werden.

Aus EP 0 924 450 A2 ist eine Achsmanschette bekannt, welche herstellungsbedingt mehrteilig ausgebildet ist und aus einem Balg aus elastomerem Werkstoff und einem separat erzeugten Ring besteht, der drei gleichmäßig in Umfangsrichtung verteilte Tripode-Elemente aufweist. Der Balg und der Ring mit den Tripode-Elementen werden im Anschluss an ihre jeweilige Herstellung, beispielsweise unter Zuführung von Wärme, miteinander verbunden.

Der Erfindung liegt die Aufgabe zugrunde, eine Achsmanschette der eingangs genannten Art derart weiter zu entwickeln, dass sie einen teilearmen, einfachen Aufbau aufweist und daher kostengünstig herstellbar ist und dass die Abdichtung der Achsmanschette auf dem Achszapfen eines Tripode-Gelenks verbessert ist.

Hierzu wird nach der Erfindung einerseits eine Achsmanschette angegeben, welche die Merkmale des Patentanspruchs 1 aufweist, sowie ein Verfahren zur ihrer Herstellung, dessen Merkmale im Patentanspruch 7 angegeben sind.

Die Achsmanschette nach der Erfindung umfasst einen Balg aus elastomerem Werkstoff, der im Bereich einer seiner Stirnseiten drei gleichmäßig in Umfangsrichtung verteilt angeordnete, sich radial nach innen erstreckende Tripode-Elemente aufweist, wobei jedes Tripode-Element zumindest zwei in Achsrichtung mit Abstand benachbart zueinander angeordnete Lamellen aufweist, wobei die Lamellen jeweils als Dichtelement ausgebildet und an einen Achszapfen eines kongruent gestalteten Tripode-Gelenks dichtend anlegbar sind. Durch die mit axialem Abstand zueinander benachbart angeordneten Lamellen weist jedes der Tripode-Elemente im Wesentlichen die Funktion einer Labyrinth-Dichtung auf, wobei die dem Tripode-Gelenk axial zugewandte Lamelle eine Abdichtung des Schmiermittels des Tripode-Gelenks in Richtung der Umgebung bewirkt. Die dem Tripode-Gelenk axial abgewandte Lamelle verhindert, dass Verunreinigungen von außen in das Tripode-Gelenk eindringen und dadurch zu dessen Beschädigung /Zerstörung führen. Weiter verbesserte Gebrauchseigenschaften können dadurch erzielt werden, dass mehr als zwei Lamellen, beispielsweise vier Lamellen jeweils mit axialem Abstand zueinander benachbart angeordnet sind.

Innerhalb des axialen Abstands zwischen den einander axial benachbarten Lamellen ist jeweils zumindest ein Stützsteg zur gegenseitigen Abstützung der Lamellen angeordnet. Bevorzugt gelangen, in Umfangsrichtung der Achsmanschette betrachtet, drei Stützstege zwischen den Lamellen zur Anwendung. Durch die Stützstege ist sichergestellt, dass die Lamellen während der bestimmungsgemäßen Verwendung der Achsmanschette einander stets mit korrektem axialem Abstand zugeordnet sind, so dass die vorteilhafte Dichtfunktion der Lamellen während der gesamten Gebrauchsdauer der Achsmanschette übereinstimmend gut ist.

Ein besonders teilearmer Aufbau und daraus resultierend eine besonders einfache Herstellbarkeit kann dadurch erreicht werden, dass der Balg, die Tripode-Elemente, die Lamellen und der wenigstens eine Stützsteg einstückig ineinander übergehend und materialeinheitlich ausgebildet sind. Dadurch ist die gesamte Achsmanschette herstellungsbedingt einteilig ausgeführt und die Gefahr von Montagefehlern ist auf ein Minimum begrenzt. Außerdem ist von Vorteil, dass durch die Materialeinheitlichkeit das Recycling im Anschluss an einen Austausch der Achsmanschette wesentlich vereinfacht ist.

Die radial innere Oberfläche der Lamellen muß in ihrer Gestalt an den Achszapfen des Tripode-Gelenks angepasst sein und ist daher für die meisten Anwendungsfälle, im Querschnitt der Achsmanschette betrachtet, bogenförmig.

Das Verhältnis der radialen Höhe der Stützstege zur radialen Höhe der Lamellen beträgt bevorzugt 0,75 bis 0,9, wobei ein Verhältnis kleiner als 1 in jedem Fall deshalb erforderlich ist, weil sich dann die gesamte Oberfläche jeder einzelnen Lamelle, in Umfangsrichtung der Achsmanschette betrachtet, gleichmäßig elastisch und radial nach außen verformen kann. Die Lamelle berührt die Dichtfläche des Achszapfens unter gleichmäßiger radialer Vorspannung, wodurch ein gutes Abdichtungsergebnis erreicht wird.

Bevorzugt ist der Balg als Faltenbalg ausgebildet. Dadurch vermag er axialen, radialen und kardanischen Verlagerungen ausgezeichnet zu folgen.

Bevorzugt besteht der Balg aus einem thermoplastischen Elastomerwerkstoff. Hierbei ist von Vorteil, dass ein solcher Werkstoff in einem einstufigen Blasverfahren verarbeitbar ist.

Ein Ausführungsbeispiel der erfindungsgemäßen Achsmanschette wird nachfolgend anhand der Figuren 1 bis 3 näher erläutert. Es zeigen jeweils in schematischer Darstellung:
- Fig. 1: eine perspektivische Darstellung einer Achsmanschette, die einem Achszapfen eines Tripode-Gelenks axial benachbart zugeordnet ist,
- Fig. 2: die Achsmanschette aus Fig. 1 in längsgeschnittener Darstellung,
- Fig. 3: die Achsmanschette aus Fig. 1 in quergeschnittener Darstellung.

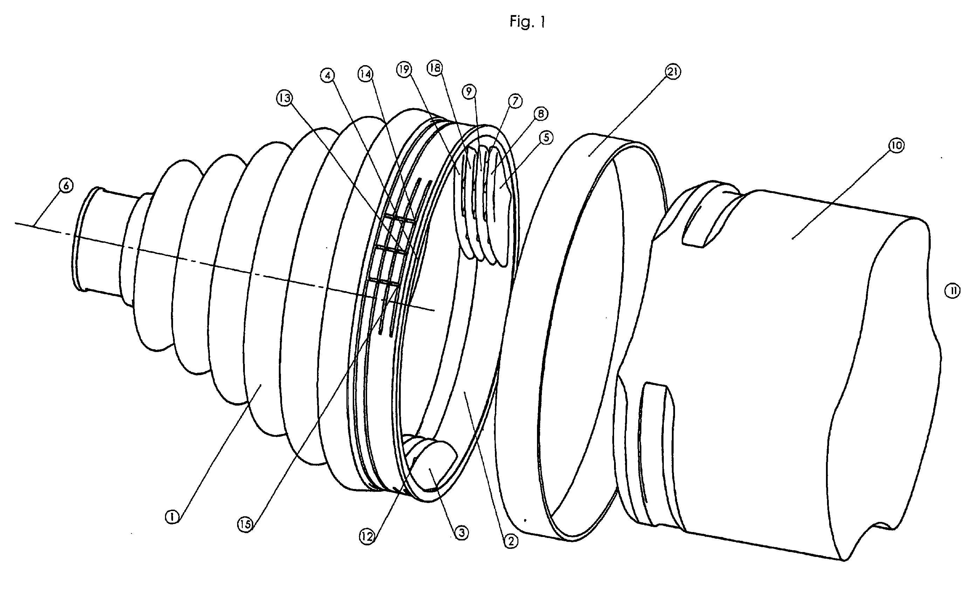

In Fig. 1 ist ein Ausführungsbeispiel einer erfindungsgemäßen Achsmanschette in perspektivischer Darstellung gezeigt. Die Achsmanschette besteht aus einem Balg 1, der als Faltenbalg ausgebildet ist. Die Stirnseite 2, die dem Achszapfen 10 des Tripode-Gelenks 11 axial zugewandt ist, weist radial innenseitig drei gleichmäßig in Umfangsrichtung verteilt angeordnete, sich radial nach innen erstreckende Tripode-Elemente 3, 4, 5 auf, wobei jedes der Tripode-Elemente 3, 4, 5 in dem hier gezeigten Ausführungsbeispiel vier in Achsrichtung 6 mit Abstand 7 benachbart zueinander angeordnete Lamellen 8, 9, 18, 19 aufweist. Jede der Lamellen 8, 9, 18, 19 ist als Dichtelement ausgebildet und berührt während der bestimmungsgemäßen Verwendung der Achsmanschette den Achszapfen 10 des Tripode-Gelenks 11 dichtend anliegend. Befestigt ist die Achsmanschette im Bereich ihrer Stirnseite 2 beispielsweise durch eine übliche, Schellenbefestigung 21, die die Achsmanschette mit dem Achszapfen 10 kraft- und /oder formschlüssig verbindet.

Der Balg 1, die Tripode-Elemente 3, 4, 5 und die Lamellen 8, 9, 18, 19 sind einstückig ineinander übergehend und materialeinheitlich ausgebildet, wobei als Werkstoff eine thermoplastischer Elastomerwerkstoff zur Anwendung gelangt. Bei derartigen Werkstoffen ist von Vorteil, dass sie zur Durchführung eines einstufigen Blasverfahrens verwendbar sind, wodurch die erfindungsgemäße Achsmanschette einfach und kostengünstig herstellbar ist.

Um eine, auch während der bestimmungsgemäßen Verwendung als Achsmanschette stets gleichbleibende Zuordnung der Lamellen zueinander zu gewährleisten, sind innerhalb des axialen Abstands 7 zwischen den einander axial benachbarten Lamellen 8, 9, 18, 19 jeweils Stützstege 13, 14, 15 zur gegenseitigen Abstützung der Lamellen 8, 9, 18, 19 angeordnet. Das Verhältnis der radialen Höhe 16 der Stützstege 13, 14, 15 zur radialen Höhe 17 der Lamellen 8, 9, 18, 19 im jeweiligen Bereich der Verbindung beträgt in diesem Ausführungsbeispiel 0,8. Dadurch, dass die radiale Höhe 16 der Stützstege 13, 14, 15 geringer ist, als die radiale Höhe 17 der Lamellen 8, 9, 18, 19, ist, in Umfangsrichtung der Achsmanschette betrachtet, in jedem Bereich der Oberfläche 12 der Lamellen 8, 9, 18, 19 eine elastische Verformung in radialer Richtung und dadurch eine ausgezeichnete Abdichtung auf dem Achszapfen 10 gewährleistet.

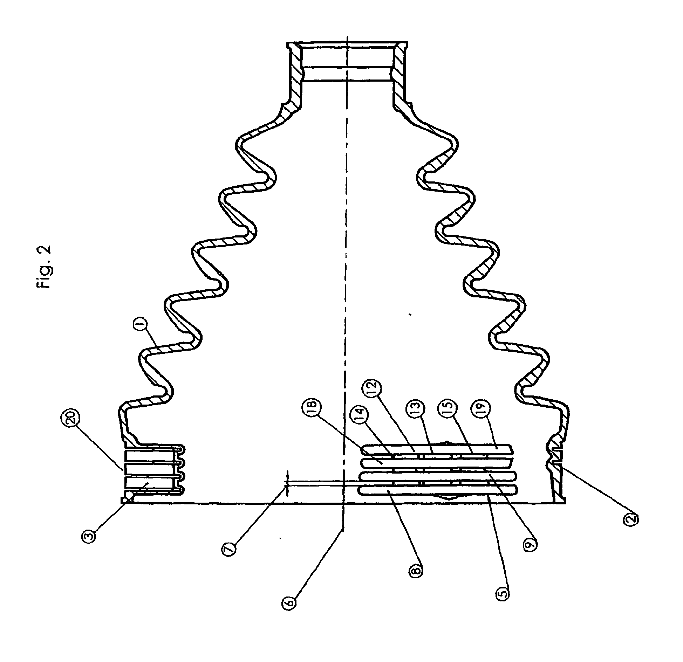

In Fig. 2 ist die Achsmanschette aus Fig. 1 in längsgeschnittener Darstellung gezeigt. Die Stirnseite 2 weist außenumfangsseitig eine nutförmige Vertiefung 20 auf, wobei nach der Montage der Achsmanschette auf dem Achszapfen 10 innerhalb der Vertiefung 20 eine Schelle zur Befestigung der Achsmanschette auf dem Achszapfen 10 angeordnet ist.

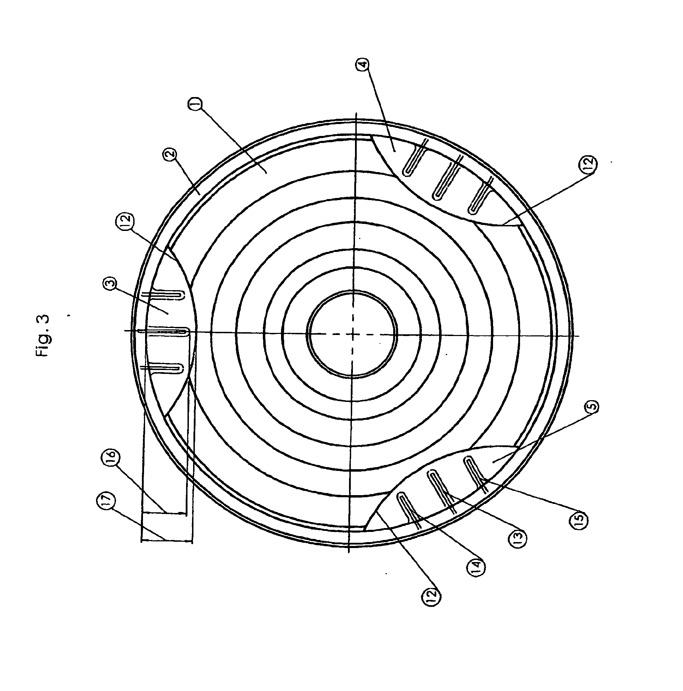

In Fig. 3 ist ein Querschnitt der Achsmanschette aus Fig. 1 gezeigt. Die Tripode-Elemente 3, 4, 5 sind gleichmäßig in Umfangsrichtung verteilt angeordnet, wobei die Lamellen, im Querschnitt der Achsmanschette betrachtet, eine bogenförmige, radial innere Oberfläche 12 aufweisen. Durch das zuvor beschriebene Verhältnis aus der radialen Höhe 16 der Stützstege 13, 14, 15 zur radialen Höhe 17 der Lamellen 8, 9, 18, 19 ergibt sich, in Umfangsrichtung der Achsmanschette betrachtet, eine übereinstimmende Federcharakteristik entlang der gesamten Oberfläche 12 der jeweiligen Lamellen 8, 9, 18, 19. Die Abdichtung der Achsmanschette, die im Wesentlichen der Abdichtung einer Labyrinthdichtung gleicht, ist daher während einer langen Gebrauchsdauer sehr zuverlässig.

## Patentansprüche

1. Achsmanschette mit einem Balg (1) aus elastomerem Werkstoff, der im Bereich einer seiner Stirnseiten (2) drei gleichmäßig in Umfangsrichtung verteilt angeordnete, sich radial nach innen erstreckende Tripode-Elemente (3, 4, 5) aufweist, jedes Tripode-Element (3, 4, 5) zumindest zwei in Achsrichtung (6) mit Abstand (7) benachbart zueinander angeordnete Lamellen (8, 9, 18, 19) aufweist, die Lamellen (8, 9, 18, 19) jeweils als Dichtelement ausgebildet und an einen Achszapfen (10) eines kongruent gestalteten Tripode-Gelenks (11) dichtend anlegbar sind, und der Balg (1), die Tripode-Elemente (3, 4, 5) und die Lamellen (8, 9, 18, 19) einstückig ineinander übergehend und materialeinheitlich ausgebildet sind, **dadurch gekennzeichnet, dass** der Balg (1), die Tripode-Elemente (3, 4, 5) und die Lamellen (8, 9, 18, 19) mittels Blasverfahren einstufig urgeformt sind, und dass innerhalb des axialen Abstands (7) zwischen einander axial benachbarten Lamellen (8, 9, 18, 19) jeweils zumindest ein Stützsteg (13, 14, 15) zur gegenseitigen Abstützung der Lamellen (8, 9, 18, 19) ebenfalls mittels des einstufigen Blasverfahrens urgeformt ist.

2. Achsmanschette nach Anspruch 1, **dadurch gekennzeichnet, dass** die Lamellen (8, 9, 18, 19) im Querschnitt der Achsmanschette betrachtet eine bogenförmige, radial innere Oberfläche (12) aufweisen.

3. Achsmanschette nach Anspruch 1 oder 2, **dadurch gekennzeichnet, dass** in Umfangsrichtung der Achsmanschette betrachtet jeweils drei Stützstege (13, 14, 15) zwischen den Lamellen (8, 9, 18, 19) angeordnet sind.

4. Achsmanschette nach einem der Ansprüche 1 bis 3, **dadurch gekennzeichnet, dass** das Verhältnis der radialen Höhe (16) der Stützstege (13, 14, 15) zur radialen Höhe (17) der Lamellen (8, 9, 18, 19) im jeweiligen Bereich der Verbindung 0,75 bis 0,9 beträgt.

5. Achsmanschette nach einem der vorangehenden Ansprüche, **dadurch gekennzeichnet, dass** der Balg (1) als Faltenbalg ausgebildet ist.

6. Achsmanschette nach einem der vorangehenden Ansprüche, **dadurch gekennzeichnet, dass** der Balg (1) aus einem thermoplastischen Elastomer-Werkstoff besteht.

7. Verfahren zur Herstellung einer Achsmanschette nach Anspruch 1, **dadurch gekennzeichnet, dass** ein schlauchförmiger Rohling radial innenseitig angeblasen und dadurch radial außenseitig an eine Werkzeugkavität angelegt wird, der Balg, die Tripode-Elemente (3, 4, 5) und die Lamellen (8, 9, 18, 19) gemeinsam in einem einstufigen Blasverfahren urgeformt werden und in dem einzigen Verfahrensschritt beim Blasverfahren zusätzlich zumindest ein Stützsteg (13, 14, 15) innerhalb des axialen Abstands (7) zwischen den Lamellen (8, 9, 18, 19) urgeformt wird.

## Claims

1. Sealing boot with a bellows (1) of elastomeric material which has, in the region of one of its end sides (2), three tripod elements (3, 4, 5), which are distributed uniformly in the circumferential direction and extend radially inwards, each tripod element (3, 4, 5) has at least two plates (8, 9, 18, 19) which are adjacent at a distance (7) to one another in the axial direction (6), the plates (8, 9, 18, 19) are each designed as a sealing element and can be placed in a sealing manner onto a spindle (10) of a tripod joint (11) of congruent design, and the bellows (1), the tripod elements (3, 4, 5) and the plates (8, 9, 18, 19) are designed such that they merge integrally into one another and are made from the same material, **characterized in that** the bellows (1), the tripod elements (3, 4, 5) and the plates (8, 9, 18, 19) are formed in a single stage by means of blow-moulding, and **in that**, within the axial distance (7) between plates (8, 9, 18, 19) which are axially adjacent to one another, at least one supporting web (13, 14, 15) in each case for mutually supporting the plates (8, 9, 18, 19) is likewise formed by means of the single-stage blow-moulding process.

2. Sealing boot according to Claim 1, **characterized in that** the plates (8, 9, 18, 19) have a curved, radially inner surface (12), as viewed in the cross section of the sealing boot.

3. Sealing boot according to Claim 1 or 2, **characterized in that** three supporting webs (13, 14, 15) are respectively arranged between the plates (8, 9, 18, 19), as viewed in the circumferential direction of the sealing boot.

4. Sealing boot according to one of Claims 1 to 3, **characterized in that** the ratio of the radial height (16) of the supporting webs (13, 14, 15) to the radial height (17) of the plates (8, 9, 18, 19) in the respective region of connection is 0.75 to 0.9.

5. Sealing boot according to one of the preceding claims, **characterized in that** the bellows (1) is designed as an expansion bellows.

6. Sealing boot according to one of the preceding claims, **characterized in that** the bellows (1) is composed of a thermoplastic elastomer material.

7. Method for production of a sealing boot according to Claim 1, **characterized in that** a tubular blank is blown into radially on the inside and, as a result, is placed radially on the outside onto a tool cavity, the bellows, the tripod elements (3, 4, 5) and the plates (8, 9, 18, 19) are formed together in a single-stage blow-moulding process, and, in the single process step of the blow-moulding process, at least one supporting web (13, 14, 15) is additionally formed within the axial distance (7) between the plates (8, 9, 18, 19).

## Revendications

1. Manchette d'essieu qui présente un soufflet (1) en un matériau élastomère qui est doté dans la zone d'un de ses côté frontaux (2) de trois éléments de trépied (3, 4, 5) qui s'étendent radialement vers l'intérieur et sont répartis régulièrement à la périphérie, chaque élément de trépied (3, 4, 5) présentant au moins deux lamelles (8, 9, 18, 19) disposées au voisinage l'une de l'autre à distance mutuelle (7) dans la direction axiale (6), les lamelles (8, 9, 18, 19) étant chacune configurées comme élément d'étanchéité et pouvant être appliquées de manière étanche sur le tourillon d'essieu (10) d'une articulation en trépied (11) de forme correspondante, et le soufflet (1), les éléments de trépied (3, 4, 5) et les lamelles (8, 9, 18, 19) étant réalisés dans le même matériau et se prolongeant d'un seul tenant les uns dans les autres, **caractérisée en ce que** le soufflet (1), les éléments de trépied (3, 4, 5) et les lamelles (8, 9, 18, 19) sont formés en une étape par un procédé de soufflage et **en ce qu'**à l'intérieur de la distance axiale (7), au moins une traverse d'appui (13, 14, 15) est formée entre les lamelles (8, 9, 18, 19) voisines axialement l'une de l'autre, également par un procédé de soufflage en une étape, pour soutenir mutuellement les lamelles (8, 9, 18, 19).

2. Manchette d'essieu selon la revendication 1, **caractérisée en ce que** dans une coupe transversale de la manchette d'essieu, les lamelles (8, 9, 18, 19) présentent une surface (12) radialement intérieure en forme d'arc de cercle.

3. Manchette d'essieu selon la revendication 1 ou 2, **caractérisée en ce que** dans le sens de la périphérie de la manchette d'essieu, trois traverses de soutien (13, 14, 15) sont disposées chaque fois entre les lamelles (8, 9, 18, 19).

4. Manchette d'essieu selon l'une quelconque des revendications 1 à 3, **caractérisée en ce que** le rapport entre la hauteur radiale (16) des traverses de soutien (13, 14, 15) et la hauteur radiale (17) des lamelles (8, 9, 18, 19) dans la partie respective de leur liaison est compris entre 0,75 et 0,9.

5. Manchette d'essieu selon l'une quelconque des revendications précédentes, **caractérisée en ce que** le soufflet (1) est un soufflet plissé.

6. Manchette d'essieu selon l'une quelconque des revendications précédentes, **caractérisée en ce que** le soufflet (1) est constitué d'un matériau élastomère thermoplastique.

7. Procédé de fabrication d'une manchette d'essieu selon la revendication 1, **caractérisé en ce qu'**une ébauche en forme de tuyau flexible est gonflé radialement par son côté intérieur et est ainsi appliqué sur son côté radialement extérieur sur une cavité d'outil, le soufflet, les éléments de trépied (3, 4, 5) et les lamelles (8, 9, 18, 19) sont moulés ensemble dans un procédé de soufflage en une étape et **en ce que** lors de l'unique étape du procédé de soufflage, au moins une traverse de soutien (13, 14, 15) est formée en supplément à l'intérieur de la distance axiale (7) entre les lamelles (8, 9, 18, 19).
